# EUROPEAN PATENT APPLICATION

(11) **EP 1 728 552 A1**
(43) Date of publication of application: **06.12.2006**
(21) Application number: 06113863.2
(22) Date of filing: 12.05.2006
(51) Int. Cl.: B01J 21/06, B01J 23/00, B01J 23/10, B01J 23/63, B01J 37/02

(54) **Exhaust gas purification catalyst**

(30) Priority: 01.06.2005 JP 2005161215
(71) Applicant: Mazda Motor Corporation, Aki-gun, Hiroshima 730-8670 (JP)
(72) Inventor: Akamine, Masaaki, Aki-gun Hiroshima Hiroshima 730-8670 (JP); Iwakuni, Hideharu, Aki-gun Hiroshima Hiroshima 730-8670 (JP); Sumida, Hirosuke, Aku-gun Hiroshima Hiroshima 730-8670 (JP)
(74) Representative: Thoma, Michael

(57) **Abstract**

In an exhaust gas purification catalyst, particles (12) of a catalytic metal-doped, Ce-Zr-based second mixed oxide are carried on the surfaces of particles (11) of a Ce-Zr-based first mixed oxide. The second mixed oxide contains Ce and Zr as metals forming its constituents. Catalytic metal atoms (13) are placed at least one of at and between crystal lattice points of the second mixed oxide. The first mixed oxide contains Ce and Zr as metals forming its constituents but no catalytic metal. Thus, the concentration of catalytic metal on the surfaces of catalyst particles is increased.

## Description

### BACKGROUND OF THE INVENTION

### (a) Field of the Invention

This invention relates to exhaust gas purification catalysts.

### (b) Description of the Related Art

In exhaust gas purification catalysts for automobiles, for example, in three-way catalysts, catalytic metal is carried in dispersed particulate form on the surfaces of particles of support materials such as high-relative-surface-area alumina and an oxygen storage component. In the catalysts, however, a problem arises that dispersed particulates of the catalytic metal move and agglomerate on the surfaces of the support material particles owing to exhaust gas heat. The catalytic metal agglomeration reduces the number of occasions for the catalytic metal to contact exhaust gas components such as HC (hydrocarbons), CO (carbon monoxides) and NOx (nitrogen oxides), which deteriorates the catalyst conversion performance.

A solution to the above problem is disclosed in published Unexamined Japanese Patent Application No. 2003-117393, which describes that a coating layer made of at least one oxide selected from aluminum oxide, zirconium oxide and cerium oxide or a mixed oxide of them is formed on the surface of each of catalyst particles obtained by carrying Pt on the surfaces of support material particles. This technique is intended to restrain the movement and agglomeration of Pt particulates using the coating layer.

Published Unexamined Japanese Patent Application No. 2003-277060 describes that a Ce-Zr mixed oxide exhibiting oxygen storage capacity has a structure in which CeO₂ exists as a kernel and the kernel is surrounded by ZrO₂ stabilized by a rare earth metal element or the like to enhance the thermal resistance.

Applicant has proposed a catalytic metal-doped, exhaust gas purification catalyst formed by placing catalytic metal atoms at least one of at and between crystal lattice points of a Ce-Zr mixed oxide containing Ce and Zr as metal constituents (see published Unexamined Japanese Patent Application No. 2004-174490). In this catalyst, catalytic metal exists not only on the surfaces of Ce-Zr mixed oxide particles but also inside of them. This increases the amount and rate of oxygen storage of the catalyst, resulting in enhanced exhaust gas purification performance. In other words, the catalyst exhibits high exhaust gas purification performance with a small amount of catalytic metal, which is advantageous for cost reduction. Further, since the catalytic metal atoms are placed at least one of at and between crystal lattice points of the mixed oxide, this restrains agglomeration and sintering of the catalytic metal particulates due to high-temperature exhaust gas.

Generally, exhaust gas purification catalysts are desired to provide higher gas purification performance with a less amount of catalytic metal. For such catalytic metal-doped catalysts as described above, all of catalytic metal particulates do not exist on the surfaces of crystallites of the mixed oxide but only some of them exist inside of the crystallites. Therefore, as the amount of catalytic metal doped in the mixed oxide decreases, the amount of catalytic metal on the surfaces of catalyst particles largely decreases, which may reduces the number of occasions for the catalytic metal to contact exhaust gas components and thereby may provide deteriorated exhaust gas purification performance.

Specifically, for each of the oxygen storage component and alumina, its crystallites do not exist in the form of separate particles but exist in the form of catalyst particles each formed of an agglomerate of a large number of crystallites. Therefore, for catalytic metal-doped mixed oxides, even if catalytic metal particulates are exposed on the surface of each crystallite, most of the catalytic metal particulates in each catalyst particle (agglomerate particle) exist inside of the catalyst particle. The conversion of exhaust gas progresses with the contact of catalytic metal with the exhaust gas mainly on the surface of each catalyst particle. Therefore, catalytic metal particulates inside of catalyst particles do not effectively act on the conversion of exhaust gas even if they are exposed on the surfaces of crystallites.

Consequently, for catalytic metal-doped catalysts, unlike catalysts formed by carrying catalytic metal on catalyst particles later, the influence of reduction of the amount of doped catalytic metal is likely to appear as deteriorated exhaust gas purification performance.

### SUMMARY OF THE INVENTION

With the foregoing in mind, an object of the present invention is to provide a catalytic metal-doped exhaust gas purification catalyst that can attain high exhaust gas purification performance even with a small amount of doped catalytic metal.

Inventors conducted experiments to reduce the amount of doped catalytic metal while maintaining good exhaust gas purification performance and further improving it and then have found that the above problem of the catalytic metal-doped catalyst can be solved by making the amount of catalytic metal on the surface of a mixed-oxide composite having oxygen storage capacity larger than that inside of the mixed-oxide composite, thereby completing the present invention.

A first solution of the present invention is an exhaust gas purification catalyst containing catalytic metal and an oxygen storage component comprising a first mixed oxide and a second mixed oxide, the first mixed oxide being composed of a Ce-Zr-based mixed oxide which contains Ce and Zr as metals forming constituents of the first mixed oxide but contains no catalytic metal, the second mixed oxide being composed of a catalytic metal-doped, Ce-Zr-based mixed oxide which contains Ce and Zr as metals forming constituents of the second mixed oxide and at least one of at and between crystal lattice points of which atoms of the catalytic metal are placed, wherein the second mixed oxide is carried on the surface of the first mixed oxide.

In the present invention, a single catalyst particle is formed so that the catalytic metal-doped second mixed oxide is carried on the surface of the first mixed oxide. More specifically, a single catalyst particle is formed so that a crystallite of the second mixed oxide or a relatively small agglomerate particle of an agglomerate of crystallites thereof is carried on the surface of an agglomerate particle of an agglomerate of crystallites of the first mixed oxide. Since in this structure no catalytic metal is contained in the first mixed oxide agglomerate particle located inside, catalytic metal particulates predominantly exist on the surface of the catalyst particle. In other words, the catalyst particle has a higher concentration of catalytic metal on its surface than in its inside.

Therefore, according to the present invention, the number of occasions of contact between catalytic metal and exhaust gas components is increased, which provides enhanced exhaust gas purification performance or reduced amount of catalytic metal without deteriorating exhaust gas purification performance.

Further, since the first and second mixed oxides are Ce-Zr-based mixed oxides, they effectively acts as oxygen storage components for promoting the activity of catalytic metal or absorbing variations in the A/F ratio of exhaust gas to prevent the deterioration of exhaust gas purification performance. Furthermore, the second mixed oxide is doped with catalytic metal and, for this reason, has a higher oxygen storage capacity than the first mixed oxide, and the second mixed oxide exists toward the surface of each catalyst particle at which it is more likely to come into contact with exhaust gas than the first mixed oxide. Therefore, the second mixed oxide effectively exhibits its excellent oxygen storage capacity and concurrently the first mixed oxide located inside provides a sufficient amount of oxygen storage and release, which is advantageous in improving the exhaust gas purification performance.

The reason for high oxygen storage capacity of the second mixed oxide is believed to be that while oxygen contacting the second mixed oxide is taken in ions into oxygen defect sites inside of each crystallite, the catalytic metal existing inside of the crystallite expedites the movement of oxygen ions from the crystallite surface to the inside.

The detailed behavior of the catalytic metal can be explained as follows: The catalytic metal inside of the crystallite acts to take in oxygen ions from the crystallite surface, so that the oxygen ions can readily move to low oxygen concentration sites (oxygen defect sites) located in the vicinity of the catalytic metal inside of the crystallite. Furthermore, since the catalytic metal exists in dispersed particulate form in the crystallite, oxygen ions move the inside of the crystallite while "hopping", so to speak, from one metal particulate to another. Therefore, the efficiency of utilization of oxygen defect sites inside of the mixed oxide is increased, the rate of oxygen storage is quickly raised, and the amount of oxygen storage is also increased.

The catalytic metal is preferably a precious metal such as Pt or Rh and particularly Rh.

A second solution of the present invention is directed to the first solution, wherein each of the first and second mixed oxides contains 50 mass% or more of CeO².

Therefore, the oxygen storage amounts of the first and second mixed oxides are increased, which is advantageous in improving the exhaust gas purification performance.

A third solution of the present invention is directed to the first solution, wherein the first mixed oxide contains 50 mass% or more of CeO² and the second mixed oxide contains 50 mass% or more of ZrO₂.

Therefore, the oxygen storage amount of the first mixed oxide is increased and concurrently the thermal stability of the second mixed oxide is improved. This is advantageous in offering high exhaust gas purification performance while enhancing the thermal resistance of the catalyst.

A fourth solution of the present invention is directed to the first solution, wherein each of the first and second mixed oxides contains 50 mass% or more of ZrO₂.

This is advantageous in enhancing the thermal resistance of the catalyst.

A fifth solution of the present invention is directed to the first solution, wherein the first mixed oxide contains 50 mass% or more of ZrO₂ and the second mixed oxide contains 50 mass% or more of CeO₂.

This is advantageous in offering high exhaust gas purification performance while enhancing the thermal resistance of the catalyst.

A sixth solution of the present invention is directed to the any one of the first to fifth solutions, wherein the amount of the first mixed oxide relative to the total amount of the first and second mixed oxides is within the range of 5 mass% to 90 mass% both inclusive.

If the amount of the first mixed oxide relative to the total amount of the first and second mixed oxides does not reach 5 mass%, the effect of predominantly collecting the catalytic metal particulates on the surface of each catalyst particle is not remarkably exhibited. On the other hand, if that amount exceeds 90 mass%, i.e., if the amount of the second mixed oxide relative to the total amount of the first and second mixed oxides does not reach 10 mass%, the concentration of catalytic metal doped in the second mixed oxide is correspondingly increased. This makes catalytic metal particulates (e.g., Rh) easy to sinter together and thereby deteriorates the catalyst performance, which is disadvantageous in improving the exhaust gas purification performance. Therefore, the amount of the first mixed oxide relative to the total amount of the first and second mixed oxides is preferably within the range of 5 mass% to 90 mass% both inclusive and more preferably within the range of 25 mass% to 75 mass% both inclusive.

### BRIEF DESCRIPTION OF THE DRAWINGS

Figure **1** is a perspective view of an exhaust gas purification catalyst according to the present invention.
Figure **2** is a partly enlarged cross-sectional view of the catalyst.
Figure **3** is a diagram showing a model of a catalyst particle of the catalyst according to the present invention.
Figure **4** is a graph showing light-off temperatures T50 and high-temperature catalytic conversion efficiencies C400 in a catalyst according to a first embodiment of the present invention.
Figure **5** is a graph showing light-off temperatures T50 and high-temperature catalytic conversion efficiencies C400 in a catalyst according to a second embodiment of the present invention.
Figure **6** is a graph showing light-off temperatures T50 and high-temperature catalytic conversion efficiencies C400 in a catalyst according to a third embodiment of the present invention.
Figure **7** is a graph showing light-off temperatures T50 and high-temperature catalytic conversion efficiencies C400 in a catalyst according to a fourth embodiment of the present invention.

### DETAILED DESCRIPTION OF THE INVENTION

Embodiments of the present invention will be described below with reference to the drawings.

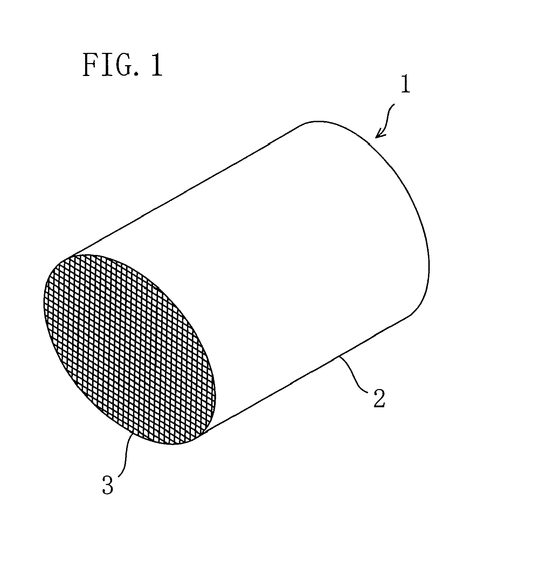

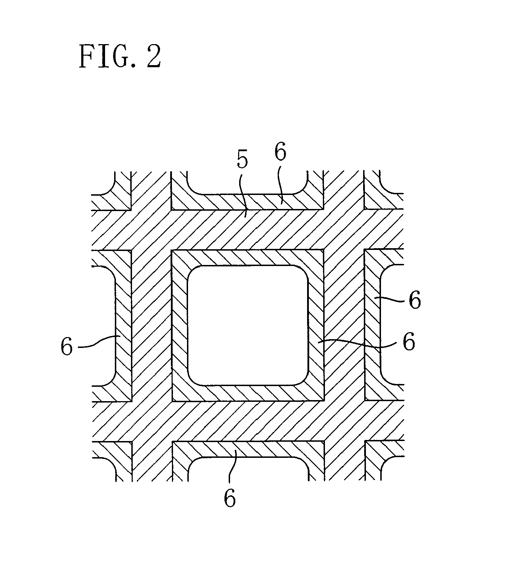

An exhaust gas purification catalyst **1** according to an embodiment of the present invention shown in Figure **1** is suitable for the conversion of HC, CO and NOx in exhaust gas from automobile engines. The catalyst **1** has a structure in which a catalytic coating is formed on the wall surfaces of each cell **3** which forms a gas channel in a honeycomb support **2** made of inorganic porous material such as cordierite. More specifically, as shown in Figure **2,** a catalytic coating **6** is formed on cell walls **5** separating each cell **3** from other cells **3** in the honeycomb support. The catalytic coating **6** is formed by washcoating catalyst powder on the support together with a binder.

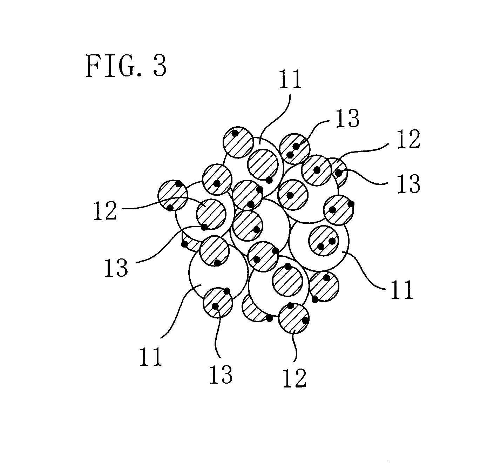

Each of catalyst particles forming the catalytic coating **6** is formed, as schematically shown in Figure **3,** so that second mixed oxide particles **12** are carried on the surface of an internal particle formed of an agglomerate of first mixed oxide particles **11.** The first mixed oxide particle **11** is made of a Ce-Zr mixed oxide containing Ce and Zr as metals forming constituents of the mixed oxide and containing no catalytic metal. The second mixed oxide particle **12** is made of a catalytic metal-doped Ce-Zr mixed oxide which contains Ce and Zr as metals forming constituents of the mixed oxide and at least one of at and between crystal lattice points of which catalytic metal atoms **13** are placed. Figure **3** is a diagram showing a model of a catalyst particle and does not intend to be understood that the present invention is limited based on it.

The catalytic coating **6** may further contain another catalyst powder formed by carrying catalytic metal on another support material, may contain alkali earth metal, such as Ba, or alkali metal as a NOx storage component or may be formed in layers on the cell walls **5** together with another catalytic coating having a different ingredient.

### Embodiment 1

The present embodiment employs a Ce-rich Ce-Zr-Nd mixed oxide as a first mixed oxide forming a constituent of each catalyst particle and a Ce-rich, Rh-doped Ce-Zr-Nd mixed oxide as a second mixed oxide. The method for preparing the catalyst particles is as follows.

### - Preparation of catalyst particles -

Respective predetermined amounts of zirconium oxynitrate, cerous nitrate and neodymium (III) nitrate were mixed with ion exchange water and the mixed solution was stirred at room temperature for about an hour. The mixed solution was heated to 80°C, then quickly mixed with 28% aqueous ammonia by pouring the mixed solution and the aqueous ammonia down into a rotating part of a disperser and thereby neutralized. The white-turbid suspension thus obtained was stirred for one or two hours and then left stand for one day and night to produce a cake, and the cake was centrifuged and sufficiently rinsed in water. The water-rinsed cake was dried by heating it up to approximately 300°C. The resultant powder was pulverized and then calcined under the condition of keeping it at 500°C for two hours.

In the above manner, Ce-rich Ce-Zr-Nd mixed oxide particles were obtained as a first mixed oxide to have a mass ratio of CeO₂ : ZrO₂ : Nd₂O₃ = 67.5 : 22.5 : 10.

Next, respective predetermined amounts of zirconium oxynitrate, cerous nitrate, neodymium (III) nitrate and rhodium nitrate were mixed with ion exchange water to make a mixed solution and the mixed solution was further mixed with the powder of the first mixed oxide and then stirred to obtain a slurry. The slurry was heated to 80°C, then quickly mixed with a predetermined amount of 28% aqueous ammonia by adding the aqueous ammonia to the slurry at once while stirring and thereby neutralized. The white-turbid suspension thus obtained was stirred for one or two hours and then left stand for one day and night to produce a cake, and the cake was centrifuged and sufficiently rinsed in water. The water-rinsed cake was dried by heating it up to approximately 300°C. The resultant powder was pulverized and then calcined under the condition of keeping it at 500°C for two hours.

In the above manner, powdered catalyst of the present invention was obtained in which particles of a second mixed oxide are carried on the surfaces of particles of the first mixed oxide.

Each particle of the second mixed oxide is made of a Ce-rich Rh-doped Ce-Zr-Nd mixed oxide particle in which Rh atoms are placed at least one of at and between crystal lattice points of a Ce-rich Ce-Zr-Nd mixed oxide particle having a mass ratio of CeO₂ : ZrO₂ : Nd₂O₃ = 67.5 : 22.5 : 10.

The above preparation was made so that the amount of first mixed oxide relative to the total amount of first and second mixed oxides ((first mixed oxide)/(first mixed oxide + second mixed oxide)) is 50 mass% and the amount of Rh relative to the amount of the catalyst powder is 0.116 mass%.

In a like manner, another two types of catalyst powders were prepared to have amounts of first mixed oxide relative to the total amount of first and second mixed oxides of 25 mass% and 75 mass%, respectively. These two types of catalyst powders was also prepared so that the amount of Rh relative to the amount of the catalyst powder is 0.116 mass%.

Additionally, still another two types of catalyst powders were prepared as comparative examples to have amounts of first mixed oxide to the total amount of first and second mixed oxides of 0 mass% and 100 mass%, respectively. The catalyst powder containing 0 mass% of first mixed oxide is made only of the second mixed oxide. The catalyst powder containing 100 mass% of first mixed oxide is made of catalyst particles in which Rh particulates are carried on the first mixed oxide (but no second mixed oxide is contained). These two types of catalyst powders was also prepared so that the amount of Rh relative to the amount of the catalyst powder is 0.116 mass%. In preparing the catalyst powder containing 100 mass% of first mixed oxide, Rh particulates were carried on the first mixed oxide by evaporation to dryness.

### - Rh concentration on catalyst particle surface -

The catalyst powder containing 50 mass% of first mixed oxide according to an example of the present embodiment and the catalyst powder containing 0 mass% of first mixed oxide according to a comparative example (catalytic power made only of the Ce-rich Rh-doped Ce-Zr-Nd mixed oxide) were examined in terms of the Rh concentration on the surface of each catalyst particle by X-ray photoelectron spectroscopy (XPS). The measuring device used is ESCA5600 by Physical Electronics, Inc. The measurement results are shown in Table 1. Table 1 shows that the catalyst powder of the inventive example has a Rh concentration on particle surface twice larger than that of the comparative example. As can be seen from this, if the second mixed oxide particles doped with catalytic metal are carried on the surface of each particle of the first mixed oxide containing no catalytic metal as in the present invention, catalytic metal particulates predominantly exist on the surface of the catalyst particle, which increases the catalytic metal concentration on the surface of each catalyst particle.

**Table 1**

| | | Rh concentration on particle surface (atom%) |
|---|---|---|
| Comparative Ex. (second mixed oxide only) | | 3.0 x 10⁻² |
| Inventive Ex. (second mixed oxide/first mixed oxide) | | 6.0 x 10⁻² |
| Remarks | first mixed oxide: Ce-Zr-Nd mixed oxide | |
| | second mixed oxide: Rh-doped Ce-Zr-Nd mixed oxide | |

### - Exhaust gas purification performance evaluation -

The catalyst powders of the inventive examples of the present embodiment and the comparative examples were used to prepare their respective samples for evaluation of exhaust gas purification performance. Specifically, each catalyst powder was mixed with alumina and zirconia binder and ion exchange water was also added to obtain a slurry. A honeycomb support was immersed in the slurry and then picked up and surplus slurry was removed by air blow to coat the support with the slurry. Next, the slurry-coated support was dried at 150°C for one hour and then calcined at 540°C for two hours, resulting in the formation of a catalytic coating on the cell walls.

Used as the honeycomb support was a cordierite-made one which has a number of cells of 400 per 1 square inch (approximately 6.54 cm²), a 4 mil-thick (approximately 0.10 mm-thick) wall separating adjacent cells and a volume of 24 mL. The amount of catalyst powder carried per L of the support is 112g/L, the amount of alumina carried per L of the support is 51 g/L, the amount of binder carried per L of the support is 18g/L and the amount of Rh carried per L of the support is 0.12g/L.

Thereafter, each sample was first aged by keeping it at 1000°C under atmospheric conditions for 24 hours and then measured in terms of light-off temperatures T50 and high-temperature catalytic conversion efficiencies C400 for conversion of HC, CO and NOx using a model gas flow reactor and an exhaust gas analyzer. T50 indicates the gas temperature at the entrance of each sample catalyst when the gas conversion efficiency reaches 50% after the temperature of the model gas flowing into the catalyst is gradually increased from normal temperature. C400 indicates the catalytic conversion efficiency of each of the above exhaust gas components when the model gas temperature at the catalyst entrance is 400°C.

In the measurement, a model gas of rich A/F ratio (temperature: 600°C) was first allowed to flow through the sample catalyst for 10 minutes and then switched to another model gas for evaluation to measure the above conversion characteristics. The model gas for evaluation had an A/F ratio of 14.7±0.9. Specifically, a mainstream gas was allowed to flow constantly at an A/F ratio of 14.7 and a predetermined amount of gas for changing the A/F ratio was added in pulses, so that the A/F ratio was forcedly periodically varied with an amplitude of ±0.9. A frequency of variations of 1Hz was used. The space velocity SV was 60000 h⁻¹ and the rate of temperature rise of the model gas was 30°C/min.

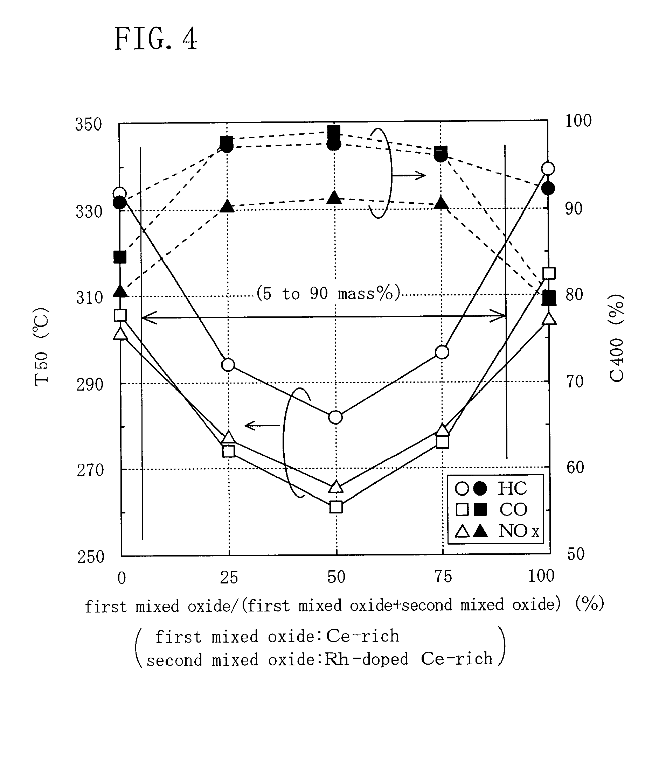

The measurement results are shown in Figure **4.** Figure **4** shows that in the case of using catalyst powder in which a Ce-rich Rh-doped second mixed oxide is carried on a Ce-rich first mixed oxide as in the present invention, the obtained sample exhibits much better results on both T50 and C400 than those in the case of the catalyst powder containing 0 mass% of first mixed oxide, i.e., the case where the catalyst powder is made only of a Ce-rich Rh-doped second mixed oxide, and in the case of the catalyst powder containing 100 mass% of first mixed oxide, i.e., the case where Rh particulates are carried on a Ce-rich first mixed oxide by evaporation to dryness. Further, it is expected from Figure **4** that if the amount of first mixed oxide relative to the total amount of first and second mixed oxides is within the range of 5 mass% to 90 mass% both inclusive, the obtained sample exhibits better exhaust gas conversion characteristics than those in the cases of the catalyst powder containing 0 mass% of first mixed oxide and the catalyst powder containing 100 mass% of first mixed oxide. Furthermore, it is expected from the figure that if particularly the amount of first mixed oxide relative to the total amount of first and second mixed oxides is within the range of 25 mass% to 75 mass% both inclusive, more preferable results can be obtained.

### Embodiment 2

In the present embodiment, a Zr-rich Ce-Zr-Nd mixed oxide is employed as a first mixed oxide which is a constituent of a catalyst particle and a Ce-rich Rh-doped Ce-Zr-Nd mixed oxide is employed as a second mixed oxide which is another constituent thereof. The Zr-rich Ce-Zr-Nd mixed oxide which is a first mixed oxide was prepared in the same manner as for the Ce-rich Ce-Zr-Nd mixed oxide in the first embodiment and was prepared to have a mass ratio of CeO₂ : ZrO₂ : Nd₂O₃ = 22.5 : 67.5 : 10. Particles of the Ce-rich Rh-doped Ce-Zr-Nd mixed oxide which is a second mixed oxide were carried on the surface of each of the Zr-rich Ce-Zr-Nd mixed oxide particles in the same manner as in the first embodiment.

Also in the present embodiment, different types of catalyst powders were prepared to have different amounts of first mixed oxide relative to the total amount of first and second oxides (first mixed oxide/(first mixed oxide + second mixed oxide)) of 25 mass%, 50 mass% and 75 mass%. Further, another two types of catalyst powders were prepared as comparative examples; catalyst powder containing 0 mass% of the first mixed oxide (containing only the Ce-rich Rh-doped Ce-Zr-Nd mixed oxide) and catalyst powder containing 100 mass% of the first mixed oxide (i.e., catalyst powder in which Rh particulates are carried on the Zr-rich Ce-Zr-Nd mixed oxide by evaporation to dryness (but which contains no second mixed oxide)). The amount of Rh contained in each of these types of catalyst powders was 0.116 mass% like the first embodiment.

### - Exhaust gas purification performance evaluation -

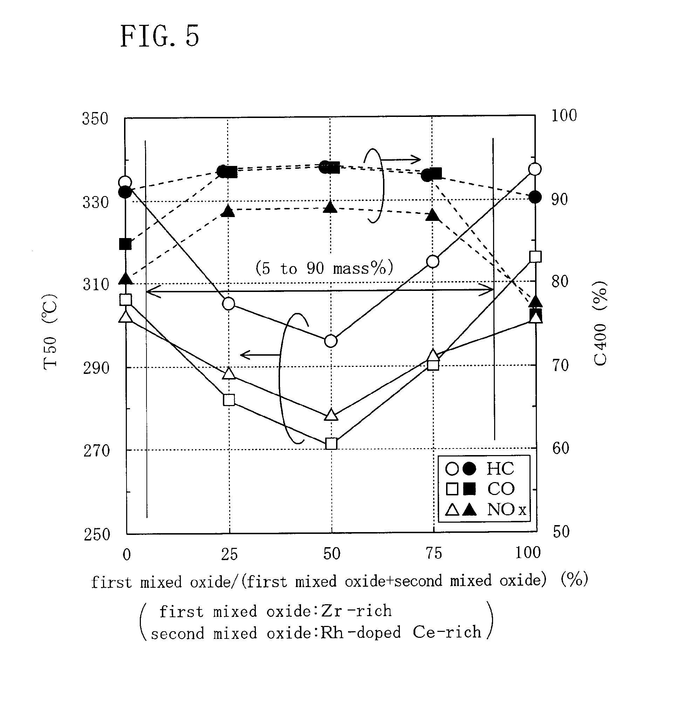

The catalyst powders of the inventive examples of the present embodiment and comparative examples were used to prepare their respective samples for evaluation of exhaust gas purification performance in the same manner as in the first embodiment. Further, like the first embodiment, the amount of catalyst powder carried per L of the honeycomb support (with a volume of 24 mL) is 112g/L, the amount of alumina carried per L of the support is 51 g/L, the amount of binder carried per L of the support is 18g/L and the amount of Rh carried per L of the support is 0.12g/L. Thereafter, each sample was first aged and then measured in terms of light-off temperatures T50 and high-temperature catalytic conversion efficiencies C400 for conversion of HC, CO and NOx in the same manner as in the first embodiment. The measurement results are shown in Figure **5**.

Figure **5** shows that also in the case of using catalyst powder in which a Ce-rich Rh-doped second mixed oxide is carried on a Zr-rich first mixed oxide as in the present embodiment, the obtained sample exhibits much better results on both T50 and C400 than those in the case of the catalyst powder containing 0 mass% of first mixed oxide (i.e., the case where the catalyst powder is made only of a Ce-rich Rh-doped second mixed oxide) and in the case of the catalyst powder containing 100 mass% of first mixed oxide (i.e., the case where Rh particulates are carried on a Zr-rich first mixed oxide by evaporation to dryness). Further, it is expected from Figure **5** that if the amount of first mixed oxide relative to the total amount of first and second mixed oxides is within the range of 5 mass% to 90 mass% both inclusive, the obtained sample exhibits better exhaust gas conversion characteristics than those in the cases of the catalyst powder containing 0 mass% of first mixed oxide and the catalyst powder containing 100 mass% of first mixed oxide. Furthermore, it is expected from the figure that if particularly the amount of first mixed oxide relative to the total amount of first and second mixed oxides is within the range of 25 mass% to 75 mass% both inclusive, more preferable results can be obtained.

### Embodiment 3

In the present embodiment, a Ce-rich Ce-Zr-Nd mixed oxide is employed as a first mixed oxide which is a constituent of a catalyst particle and a Zr-rich Rh-doped Ce-Zr-Nd mixed oxide is employed as a second mixed oxide which is another constituent thereof. The Ce-rich Ce-Zr-Nd mixed oxide which is a first mixed oxide was the same as the first mixed oxide in the first embodiment. Particles of the Zr-rich Rh-doped Ce-Zr-Nd mixed oxide which is a second mixed oxide were carried on the surface of each of the Ce-rich Ce-Zr-Nd mixed oxide particles in the same manner as in the first embodiment. The Zr-rich Rh-doped Ce-Zr-Nd mixed oxide was prepared to have a mass ratio of CeO₂ : ZrO₂ : Nd₂O₃ = 22.5 : 67.5 : 10.

Also in the present embodiment, different types of catalyst powders were prepared to have different amounts of first mixed oxide relative to the total amount of first and second oxides (first mixed oxide/(first mixed oxide + second mixed oxide)) of 25 mass%, 50 mass% and 75 mass%. Further, another two types of catalyst powders were prepared as comparative examples; catalyst powder containing 0 mass% of the first mixed oxide (containing only the Zr-rich Rh-doped Ce-Zr-Nd mixed oxide) and catalyst powder containing 100 mass% of the first mixed oxide (i.e., catalyst powder in which Rh particulates are carried on the Ce-rich Ce-Zr-Nd mixed oxide by evaporation to dryness (but which contains no second mixed oxide)). The amount of Rh contained in each of these types of catalyst powders was 0.116 mass% like the first embodiment.

### - Exhaust gas purification performance evaluation -

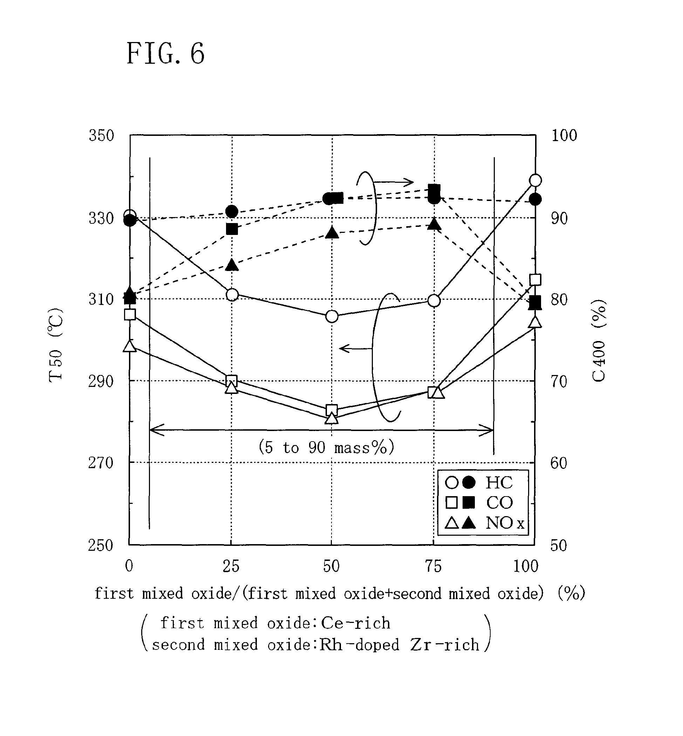

The catalyst powders of the inventive examples of the present embodiment and comparative examples were used to prepare their respective samples for evaluation of exhaust gas conversion characteristics in the same manner as in the first embodiment. Further, like the first embodiment, the amount of catalyst powder carried per L of the honeycomb support (with a volume of 24 mL) is 112g/L, the amount of alumina carried per L of the support is 51g/L, the amount of binder carried per L of the support is 18g/L and the amount of Rh carried per L of the support is 0.12g/L. Thereafter, each sample was first aged and then measured in terms of light-off temperatures T50 and high-temperature catalytic conversion efficiencies C400 for conversion of HC, CO and NOx in the same manner as in the first embodiment. The measurement results are shown in Figure **6.**

Figure **6** shows that also in the case of using catalyst powder in which a Zr-rich Rh-doped second mixed oxide is carried on a Ce-rich first mixed oxide as in the present embodiment, the obtained sample exhibits much better results on light-off temperature T50 than those in the case of the catalyst powder containing 0 mass% of first mixed oxide (i.e., the case where the catalyst powder is made only of a Zr-rich Rh-doped second mixed oxide) and in the case of the catalyst powder containing 100 mass% of first mixed oxide (i.e., the case where Rh particulates are carried on a Ce-rich first mixed oxide by evaporation to dryness). The samples of the inventive examples also exhibited better results on high-temperature catalytic conversion efficiency C400 in the conversion of CO and NOx than those of the comparative examples, although they had small differences in C400 in the conversion of HC. Further, it is expected from Figure **6** that if the amount of first mixed oxide relative to the total amount of first and second mixed oxides is within the range of 5 mass% to 90 mass% both inclusive, the obtained sample exhibits better exhaust gas conversion characteristics than those in the cases of the catalyst powder containing 0 mass% of first mixed oxide and the catalyst powder containing 100 mass% of first mixed oxide. Furthermore, it is expected from the figure that if particularly the amount of first mixed oxide relative to the total amount of first and second mixed oxides is within the range of 25 mass% to 75 mass% both inclusive, more preferable results can be obtained.

### Embodiment 4

In the present embodiment, a Zr-rich Ce-Zr-Nd mixed oxide is employed as a first mixed oxide which is a constituent of a catalyst particle and a Zr-rich Rh-doped Ce-Zr-Nd mixed oxide is employed as a second mixed oxide which is another constituent thereof. The Zr-rich Ce-Zr-Nd mixed oxide which is a first mixed oxide is the same as the first mixed oxide in the first embodiment. Particles of the Zr-rich Rh-doped Ce-Zr-Nd mixed oxide which is a second mixed oxide were carried on the surface of each of the Zr-rich first mixed oxide particles in the same manner as in the first embodiment. The Zr-rich Rh-doped Ce-Zr-Nd mixed oxide was prepared to have a mass ratio of CeO₂ : ZrO₂ : Nd₂O₃ = 22.5 : 67.5 : 10 as in the third embodiment.

Also in the present embodiment, different types of catalyst powders were prepared to have different amounts of first mixed oxide relative to the total amount of first and second oxides (first mixed oxide/(first mixed oxide + second mixed oxide)) of 25 mass%, 50 mass% and 75 mass%. Further, another two types of catalyst powders were prepared as comparative examples; catalyst powder containing 0 mass% of the first mixed oxide (containing only the Zr-rich Rh-doped Ce-Zr-Nd mixed oxide) and catalyst powder containing 100 mass% of the first mixed oxide (i.e., catalyst powder in which Rh particulates are carried on the Zr-rich Ce-Zr-Nd mixed oxide by evaporation to dryness (but which contains no second mixed oxide)). The amount of Rh contained in each of these types of catalyst powders was 0.116 mass% like the first embodiment.

### - Exhaust gas purification performance evaluation -

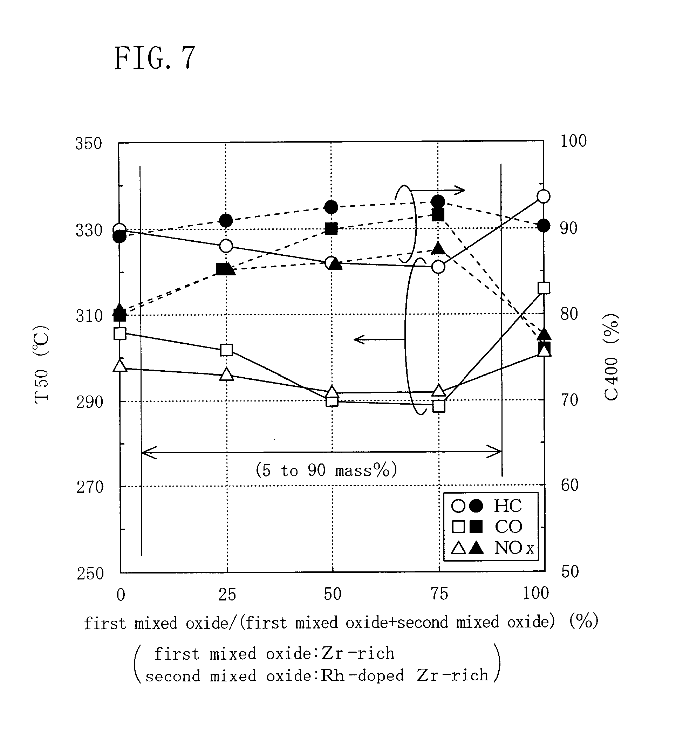

The catalyst powders of the inventive examples of the present embodiment and comparative examples were used to prepare their respective samples for evaluation of exhaust gas conversion characteristics in the same manner as in the first embodiment. Further, like the first embodiment, the amount of catalyst powder carried per L of the honeycomb support (with a volume of 24 mL) is 112g/L, the amount of alumina carried per L of the support is 51 g/L, the amount of binder carried per L of the support is 18g/L and the amount of Rh carried per L of the support is 0.12g/L. Thereafter, each sample was first aged and then measured in terms of light-off temperatures T50 and high-temperature catalytic conversion efficiencies C400 for conversion of HC, CO and NOx in the same manner as in the first embodiment. The measurement results are shown in Figure **7**.

Figure **7** shows that also in the case of using catalyst powder in which a Zr-rich Rh-doped second mixed oxide is carried on a Zr-rich first mixed oxide as in the present embodiment, the obtained sample exhibits much better results on both T50 and C400 than those in the case of the catalyst powder containing 0 mass% of first mixed oxide (i.e., the case where the catalyst powder is made only of a Zr-rich Rh-doped second mixed oxide) and in the case of the catalyst powder containing 100 mass% of first mixed oxide (i.e., the case where Rh particulates are carried on a Zr-rich first mixed oxide by evaporation to dryness). Further, it is expected from Figure **7** that if the amount of first mixed oxide relative to the total amount of first and second mixed oxides is within the range of 5 mass% to 90 mass% both inclusive, the obtained sample exhibits better exhaust gas conversion characteristics than those in the cases of the catalyst powder containing 0 mass% of first mixed oxide and the catalyst powder containing 100 mass% of first mixed oxide. Furthermore, it is expected from the figure that if particularly the amount of first mixed oxide relative to the total amount of first and second mixed oxides is within the range of 25 mass% to 75 mass% both inclusive, more preferable results can be obtained.

Catalyst powder in which particles of a Ce-Zr-based second mixed oxide doped with catalytic metal are carried on the surface of each particle of a Ce-Zr-based first mixed oxide containing no catalytic metal may be prepared by the following sequential precipitation.

Specifically, respective predetermined amounts of zirconium oxynitrate, cerous nitrate and neodymium (III) nitrate are mixed with ion exchange water and the mixed solution is stirred at room temperature for about an hour. The mixed solution is heated to 80°C, then quickly mixed with 28% aqueous ammonia by pouring the mixed solution and the aqueous ammonia down into a rotating part of a disperser and thereby neutralized to obtain white-turbid basic suspension. A solution obtained by mixing respective predetermined amounts of zirconium oxynitrate, cerous nitrate, neodymium (III) nitrate and rhodium nitrate and ion exchange water is added to the basic suspension being stirred so that the suspension is neutralized. Then, the white-turbid suspension is stirred for one or two hours and then left stand for one day and night to produce a cake, and the cake is centrifuged and sufficiently rinsed in water. The water-rinsed cake is dried by heating it up to approximately 300°C. The resultant powder is pulverized and then calcined under the condition of keeping it at 500°C for two hours.

In the above manner, catalyst powder according to the present invention is obtained in which particles of the second mixed oxide are carried on the surface of each particle of the first mixed oxide.

## Claims

1. An exhaust gas purification catalyst containing catalytic metal and an oxygen storage component comprising a first mixed oxide and a second mixed oxide, the first mixed oxide being composed of a Ce-Zr-based mixed oxide which contains Ce and Zr as metals forming constituents of the first mixed oxide but contains no catalytic metal, the second mixed oxide being composed of a catalytic metal-doped, Ce-Zr-based mixed oxide which contains Ce and Zr as metals forming constituents of the second mixed oxide and at least one of at and between crystal lattice points of which atoms of the catalytic metal are placed, wherein the second mixed oxide is carried on the surface of the first mixed oxide.

2. The exhaust gas purification catalyst of claim 1, wherein each of the first and second mixed oxides contains 50 mass% or more of CeO₂.

3. The exhaust gas purification catalyst of claim 1, wherein the first mixed oxide contains 50 mass% or more of CeO₂ and the second mixed oxide contains 50 mass% or more of ZrO₂.

4. The exhaust gas purification catalyst of claim 1, wherein each of the first and second mixed oxides contains 50 mass% or more of ZrO₂.

5. The exhaust gas purification catalyst of claim 1, wherein the first mixed oxide contains 50 mass% or more of ZrO₂ and the second mixed oxide contains 50 mass% or more of CeO₂.

6. The exhaust gas purification catalyst of any one of claims 1 to 5, wherein the amount of the first mixed oxide relative to the total amount of the first and second mixed oxides is within the range of 5 mass% to 90 mass% both inclusive.
